# EUROPÄISCHE PATENTANMELDUNG

(11) **EP 4 847 783 A1**
(43) Veröffentlichungstag der Anmeldung: **02.12.2026**
(21) Anmeldenummer: 26181207.7
(22) Anmeldetag: 27.05.2026
(51) Int. Cl.: F04D 13/06, F04D 15/00, H04B 10/80, G08C 19/00

(54) **VERFAHREN UND ANORDNUNG ZUM KOMMUNIZIEREN ZWISCHEN EINER MOTORSTEUERUNG UND EINER STEUERUNG**

(30) Priorität: 30.05.2025 BE 202500058
(71) Anmelder: WILO SE, 44263 Dortmund (DE)
(72) Erfinder: Henkel, Henner, 44263 Dortmund (DE)
(74) Vertreter: Michalski Hüttermann & Partner mbB

(57) **Zusammenfassung**

Gegenstand der Erfindung ist ein Verfahren zum Kommunizieren zwischen einer Motorsteuerung (1) einer Kreiselpumpe (2) und einer räumlich von der Motorsteuerung (1) abgesetzten Steuerung (3), wobei die Motorsteuerung (1) oder die Steuerung (3) ein Paar antiparallel geschalteter Optokoppler (5) aufweist und das Paar antiparallel geschalteter Optokoppler (5) mittels einer Signalleitung (6) mit der Steuerung (3) oder der Motorsteuerung (1) verbunden ist, mit dem Schritt: bidirektionales Kommunizieren zwischen der Motorsteuerung (1) und der Steuerung (3) über das Paar antiparallel geschalteter Optokoppler (5) mittels asynchroner serieller Datenübertragung.

## Beschreibung

### Technisches Gebiet

Die Erfindung betrifft ein Verfahren zum Kommunizieren zwischen einer Motorsteuerung einer Kreiselpumpe und einer räumlich von der Motorsteuerung abgesetzten Steuerung, wobei die Motorsteuerung oder die Steuerung ein Paar antiparallel geschalteter Optokoppler aufweist und das Paar antiparallel geschalteter Optokoppler mittels einer Signalleitung mit der Steuerung oder der Motorsteuerung verbunden ist. Die Erfindung betrifft ferner eine Anordnung aufweisend eine Motorsteuerung einer Kreiselpumpe, eine räumlich von der Motorsteuerung abgesetzte Steuerung und eine Signalleitung, wobei die Motorsteuerung oder die Steuerung ein Paar antiparallel geschalteter Optokoppler aufweist und das Paar antiparallel geschalteter Optokoppler mittels der Signalleitung mit der Steuerung oder der Motorsteuerung verbunden ist.

### Hintergrund der Erfindung

Zum Kommunizieren zwischen einer Motorsteuerung einer Kreiselpumpe und einer räumlich von der Motorsteuerung abgesetzten Steuerung sind diverse Verfahren bekannt, die grundsätzlich geeignet sind, komplexe Informationen zwischen den Steuerungen auszutauschen. Gleichzeitig gehen die bekannten Verfahren mit einem erheblichen Aufwand zur Kodierung und Dekodierung der Informationen einher und sind für einen Einsatz in einfachen Anwendungsbereichen uninteressant, obwohl der Bedarf nach Informationsaustausch zunimmt.

Bekannte Verfahren nutzen beispielsweise eine Signalleitung, auf der ein pulsweitenmoduliertes, PWM, bidirektionales Signal angelegt wird. Das Signal repräsentiert eine Zustandsgröße, während ein Wert der Zustandsgröße durch einen Wert der Pulsweite, die im Bereich zwischen etwas über 0% und beinahe 100% einer maximalen Pulsweite variierbar ist, repräsentiert ist.

Ein Problem dieser eigentlich relativ einfachen Form des Informationsaustausches ist, dass nur eine einzige vorgegebene Zustandsgröße in ihrem entsprechenden Wert übertragen werden kann. Da sich alle Signale wie beispielsweise Leistung oder Status wie Betrieb, Standby, Fehler oder Warnung den PWM-Wertebereich teilen, existieren zudem Einschränkungen dahingehend, dass eine Anzahl der Signale begrenzt ist, nicht mehrere Signale in eine Richtung gleichzeitig aktiv sein können, der Wertebereich begrenzt und auch eine Genauigkeit der Werte begrenzt ist.

### Beschreibung der Erfindung

Ausgehend von dieser Situation ist es eine Aufgabe der vorliegenden Erfindung, ein Verfahren zum Kommunizieren zwischen einer Motorsteuerung einer Kreiselpumpe und einer räumlich von der Motorsteuerung abgesetzten Steuerung und eine entsprechende Anordnung anzugeben, welches idealerweise unter Ausnutzung bereits in der Motorsteuerung und der Steuerung vorgesehener Hardware eine verbesserte Kommunikation ohne vorbeschriebene Einschränkungen erlaubt, insbesondere Zuverlässigkeit und Effizienz der Kommunikation über eine einfache Signalleitung verbessert.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch ein Verfahren zum Kommunizieren zwischen einer Motorsteuerung einer Kreiselpumpe und einer räumlich von der Motorsteuerung abgesetzten Steuerung, wobei
die Motorsteuerung oder die Steuerung ein Paar antiparallel geschalteter Optokoppler aufweist und das Paar antiparallel geschalteter Optokoppler mittels einer Signalleitung mit der Steuerung oder der Motorsteuerung verbunden ist, mit dem Schritt:
bidirektionales Kommunizieren zwischen der Steuerung und der Motorsteuerung über des Paar antiparallel geschalteter Optokoppler mittels asynchroner serieller Datenübertragung.

Ein wesentlicher Punkt der vorgeschlagenen Lösung liegt darin, dass insbesondere bereits in der Motorsteuerung und/oder der Steuerung ohnehin vorhandene bidirektionale PWM-Hardware aufweisend das Paar antiparallel geschalteter Optokoppler nicht zur pulsweitenmodulierten Datenübertragung, sondern stattdessen zur asynchronen seriellen Datenübertragung genutzt wird. Derart überwindet die vorgeschlagene Lösung Einschränkungen der bidirektionalen PWM, verbessert insbesondere eine Anzahl übertragbarer Werte, Wertebereich und/oder Genauigkeit. Besonderes vorteilig ist das Verfahren insofern, als dass ein Gerätetyp der Motorsteuerung und der Steuerung, der derzeit bidirektionale PWM-Hardware enthält, ohne Hardware-Änderung auf vorgeschlagene Lösung erweitert werden kann. Zudem lassen sich zur asynchronen seriellen Datenübertragung eine Vielzahl unterschiedlicher Kommunikationsprotokolle nutzen, beispielsweise ein später beschriebenes Modbus-Seriell-Protokoll.

In anderen Worten umfasst das Verfahren eine Kommunikationsarchitektur zwischen einer Motorsteuerung und einer räumlich entfernten Steuerungseinheit als Steuerung, wobei wenigstens eine der beiden Steuerungen ein Paar antiparallel geschalteter Optokoppler enthält. Diese Optokoppler sind über eine gemeinsame Signalleitung verbunden, wodurch eine bidirektionale Übertragung von Informationen, wie beispielsweise Leistung oder Status wie Betrieb, Standby, Fehler oder Warnung, ermöglicht wird. Die Kommunikation erfolgt asynchron und seriell, was eine einfache, robuste und kostengünstige Übertragung erlaubt. Die Motorsteuerung kann eine Steuereinheit zur Steuerung und/oder Regelung eines Antriebsmotors einer Kreiselpumpe darstellen. Die räumlich abgesetzte Steuerung kann zentrale Steuerungsfunktionen übernehmen. Durch die antiparallele Anordnung der Optokoppler ist eine bidirektionale Kommunikation mit nur einer Signalleitung umfassend beispielsweise lediglich drei Leiter realisierbar, was den Verkabelungsaufwand reduziert.

Die insbesondere mikroprozessor-basierte Motorsteuerung der Kreiselpumpe ist bevorzugt als eine elektronische Steuereinheit gestaltet, die den Antriebsmotor der Kreiselpumpe regelt und/oder überwacht. Die Motorsteuerung steuert insbesondere die Drehzahl, Laufrichtung und/oder Start-Stopp-Funktionen des Antriebsmotors in Abhängigkeit von Prozessparametern wie Förderdruck, Volumenstrom oder Temperatur. Die Motorsteuerung kann auch Schutzfunktionen wie Überlast- und Überhitzungsschutz integrieren, um einen sicheren Betrieb der Kreiselpumpe zu gewährleisten. In vielen Anwendungen ist die Motorsteuerung direkt in die Kreiselpumpe integriert oder unmittelbar an dieser angeordnet, was Platz spart und Installationsaufwand reduziert.

Als Kreiselpumpe wird im Allgemeinen eine Strömungsmaschine bezeichnet, die eine Drehbewegung und dynamische Kräfte zur Förderung überwiegend von Flüssigkeiten als Fluid nutzt. Bei der Kreiselpumpe wird neben einer tangentialen Beschleunigung der Flüssigkeit eine in radialer Strömung auftretende Fliehkraft zur Förderung genutzt, so dass solche Pumpen ebenso als Zentrifugalpumpen bezeichnet werden. Bevorzugt lässt sich die Kreiselpumpe für eine hydraulische Anlage eines Gebäudes oder sonstige Anwendungen verwenden, insbesondere als Schmutzwasserpumpe. Das Fluid bzw. die Flüssigkeit umfasst bevorzugt Wasser oder ein sonstiges flüssiges Medium wie beispielsweise Abwasser. Das Fluid bzw. die Flüssigkeit kann insofern auch Feststoffe wie beispielsweise Verschmutzungen, Verunreinigungen oder Müll jeglicher Art, insbesondere Fäkalien, Sedimente, Dreck, Sand, oder auch kleinere Holz-, Gestrüpp-, Textilien- oder Lappenteile oder dergleichen umfassen.

Die Kreiselpumpe weist bevorzugt ein Pumpengehäuse auf, in dem der Antriebsmotor angeordnet und in welchem ein den Antriebsmotor über eine Welle antreibbares Laufrad zum Fördern der Flüssigkeit vorgesehen ist. Die Motorsteuerung ist bevorzugt in einem Elektronikgehäuse vorgesehen, welches wiederum an dem Pumpengehäuse angeordnet ist. Der Begriff räumlich abgesetzt meint insofern insbesondere, dass die Steuerung nicht Bestandteil der Kreiselpumpe ist. Die Steuerung im Kontext einer Kreiselpumpe bezeichnet insbesondere eine übergeordnete, räumlich von der Motorsteuerung abgesetzte Steuereinheit, die beispielsweise zentrale Funktionen zur Regelung und/oder Überwachung eines Pumpbetriebs übernimmt. Die Steuerung kann zudem Eingangssignale von Sensoren und/oder Benutzerbefehle verarbeiten, mit externen Systemen kommunizieren und/oder basierend auf extern erhaltenen Informationen Steuersignale für die Motorsteuerung generieren, die über die Signalleitung an die Motorsteuerung übertragen werden.

Die insbesondere Computer- oder Mikroprozessor-basierte Steuerung kann beispielsweise Sollwerte für die Drehzahl oder den Volumenstrom vorgeben, Betriebszustände überwachen und Fehlerzustände diagnostizieren. Über standardisierte Feldbus- oder Netzwerkprotokolle kann die Steuerung in ein übergeordnetes Automatisierungsnetzwerk eingebunden sein und/oder mit anderen Komponenten einer Anlage kommunizieren. Durch die räumliche Trennung von der Motorsteuerung eignet sich die Steuerung insbesondere für Anwendungen mit verteilten Steuerarchitekturen und erhöhtem Sicherheits- und/oder Steuerungsbedarf.

Ein Paar antiparallel geschalteter Optokoppler besteht aus zwei Optokopplern, deren Eingangsschaltungen elektrisch gegensinnig, also mit entgegengesetzter Polarität, an die gemeinsame Signalleitung angeschlossen sind. Jeder Optokoppler besteht aus einer Lichtquelle, typischerweise einer LED, und einem lichtempfindlichen Empfänger, etwa einem Fototransistor, die optisch, aber nicht elektrisch miteinander gekoppelt sind. Durch die antiparallele Verschaltung kann bei einer polaritätsabhängigen Ansteuerung jeweils nur einer der beiden Optokoppler aktiv sein, wodurch bidirektionale Datenübertragung über eine einzige Signalleitung ermöglicht wird; je nach Stromflussrichtung wird einer der beiden Optokoppler durchgeschaltet. Dieses Prinzip erlaubt eine einfache und entkoppelte Kommunikation zwischen der Motorsteuerung und der Steuerung, insbesondere in Umgebungen mit erhöhten Störanforderungen oder galvanischer Trennung, und eignet sich ideal für die vorgeschlagene serielle asynchrone Kommunikation.

Grundsätzlich ist eine Signalleitung ist eine elektrische Verbindung, die insbesondere zur Übertragung von Steuer-, Daten- und/oder Kommunikationssignalen zwischen zwei oder mehreren elektronischen Komponenten dient. In der hier beschriebenen Anwendung verbindet die Signalleitung die Motorsteuerung der Kreiselpumpe mit einer räumlich getrennten Steuerung und überträgt bidirektional serielle Daten. Die Signalleitung kann ein- oder mehradrig ausgeführt sein; typischerweise besteht sie aus zwei oder drei Leitern, wobei ein gemeinsamer Leiter für beide Kommunikationsrichtungen genutzt werden kann. In Kombination mit den antiparallel geschalteten Optokopplern ermöglicht die Signalleitung eine besonders einfache, störsichere und galvanisch getrennte Datenübertragung, ohne dass komplexe oder separate Sende- und Empfangsleitungen erforderlich sind. Die einfache Struktur und Robustheit machen die Signalleitung besonders geeignet für industrielle Umgebungen mit hohen Anforderungen an Zuverlässigkeit und EMV-Verträglichkeit.

Als asynchrone serielle Datenübertragung wird ein Kommunikationsverfahren verstanden, bei dem Datenbits, also "0" oder "1", nacheinander - also seriell - über eine einzelne Leitung der Signalleitung übertragen werden, ohne dass ein separates Taktsignal zwischen Sender und Empfänger, also zwischen Motorsteuerung und Steuerung, ausgetauscht wird. Stattdessen wird jedes Datenpaket durch definierte Start- und Stoppbits eingerahmt, wodurch der Empfänger erkennt, wann eine Übertragung eines Zeichens beginnt und endet. Diese Form der Übertragung ist besonders einfach zu implementieren und benötigt nur minimale Hardware, da keine gemeinsame Taktleitung erforderlich ist. Asynchrone serielle Datenübertragung eignet sich insofern ideal für Anwendungen mit geringer bis mittlerer Datenrate, wie es bei Kreiselpumpen der Fall ist. In industriellen Anwendungen - wie etwa der Kommunikation zwischen der Motorsteuerung und der abgesetzten Steuerung - kann die asynchrone serielle Übertragung häufig über Protokolle wie Modbus realisiert werden und ermöglicht eine zuverlässige, robuste Datenübertragung selbst über größere Distanzen und unter störbehafteten Bedingungen. Bidirektionales Kommunizieren zwischen der Steuerung und der Motorsteuerung über das Paar antiparallel geschalteter Optokoppler mittels asynchroner serieller Datenübertragung bedeutet insbesondere, dass die Kommunikation über die Optokoppler läuft, diese nämlich insbesondere mit der Signalleitung verbunden sind.

Grundsätzlich lässt sich ein beliebiges Kommunikationsprotokoll zum bidirektionalen Kommunizieren verwenden. Nach einer besonders bevorzugten Ausgestaltung erfolgt das bidirektionale Kommunizieren nach einem Modbus-Protokoll, insbesondere gemäß IEC 61158, bevorzugt nach CPF15. Das Modbus-Protokoll ist ein Kommunikationsprotokoll in der industriellen Automatisierungstechnik, das grundsätzlich einen Austausch von Daten zwischen Steuergeräten wie SPS, Motorsteuerungen und Sensoren regelt. Das Protokoll basiert auf einer Master-Slave-Architektur und kann über verschiedene physikalische Schnittstellen wie RS-485, TCP/IP oder serielle Leitungen verwendet werden.

Die Version gemäß IEC 61158 normiert Modbus als industrielles Feldbusprotokoll innerhalb eines umfassenden Standards für industrielle Kommunikation. Insbesondere die Variante nach CPF15, Communication Profile Family 15, spezifiziert einen Einsatz von Modbus über serielle asynchrone Schnittstellen, einschließlich der elektrischen und protokollspezifischen Parameter. Diese standardisierte Form gewährleistet hohe Interoperabilität zwischen Komponenten unterschiedlicher Hersteller und sichert eine zuverlässige, deterministische Kommunikation in Echtzeitumgebungen. CPF15 eignet sich besonders für Anwendungen mit begrenzter Bandbreite und hoher Störanfälligkeit, wie sie typischerweise in der Prozessautomatisierung oder in der Kommunikation mit dezentralen Steuereinheiten wie Motorsteuerungen von Kreiselpumpen auftreten. Im Ergebnis ermöglicht die Ausgestaltung eine Kompatibilität mit industriell weit verbreiteten Standards und/oder vereinfacht eine Integration in bestehende Automatisierungsinfrastrukturen.

Gemäß einer weiteren bevorzugten Ausgestaltung weist die Signalleitung drei Leiter auf und ist einer der drei Leiter mit allen Optokopplern verbunden. Die Signalleitung umfasst in der bevorzugten Ausgestaltung also drei elektrische Leiter, wobei einer dieser Leiter - typischerweise als gemeinsamer Bezugspunkt oder Masseleiter ausgeführt - mit allen beteiligten Optokopplern verbunden ist. Die beiden anderen Leiter dienen der Übertragung der bidirektionalen Kommunikationssignale, die über die antiparallel geschalteten Optokoppler zwischen der Motorsteuerung und der abgesetzten Steuerung ausgetauscht werden. Der gemeinsame Leiter ermöglicht eine stabile Referenz für Signalpegel beider Richtungen und trägt zur Vereinfachung der Schaltungstopologie bei. Durch diese dreileitige Struktur können Kommunikationssignale effizient, robust und galvanisch getrennt übertragen werden, ohne dass separate Masse- oder Steuerspannungsleitungen erforderlich sind. Zudem wird durch eine Reduktion potenzieller Störquellen und vereinfachte Verkabelung eine erhöhte EMV-Festigkeit erreicht.

Nach einer bevorzugten Weiterbildung sind die Motorsteuerung und die Steuerung wenigstens 1, 2 oder 5 m räumlich voneinander entfernt angeordnet, so dass eine Kommunikation über eine größere Distanz hinweg ermöglicht wird. Diese räumliche Trennung ist insbesondere in industriellen Umgebungen relevant oder sogar vorgegeben, in denen die Motorsteuerung direkt an der Kreiselpumpe vor Ort montiert ist, während die Steuerung in einem geschützten zentralen Schaltschrank oder in einer entfernten Leitwarte installiert ist. Die Distanzvorgaben von mindestens 1, 2, 5 oder sogar 10, 20, 50 oder 100 Metern verdeutlichen die Eignung der vorgeschlagenen Lösung für flexible Installationsszenarien und unterschiedlich große Anlagenlayouts. Trotz einer solchen Entfernung wird durch die Verwendung antiparallel geschalteter Optokoppler und der Signalleitung eine zuverlässige, störsichere und bidirektionale Datenübertragung gewährleistet, ohne dass aufwendige Schnittstellen oder Signalverstärker erforderlich sind.

Gemäß einer weiteren bevorzugten Ausgestaltung ist das Paar antiparallel geschalteter Optokoppler Bestandteil eines Pulsweitenmodulation-Controllers. Eine Vielzahl existierenden Kreiselpumpen und Steuerungen weisen vorhandene Pulsweitenmodulation, PWM-Controller auf, die, im Falle der Kreiselpumpe, sowohl für eine Modulation einer Motoransteuerung des Antriebsmotors als auch für die Kommunikation zuständig sind. Nach der vorgeschlagenen Lösung kann der PWM-Controller zwar weiterhin die Motoransteuerung des Antriebsmotors mittels geeigneter Pulsweiten-Signale ausüben, nutzt jedoch PWM nicht mehr zur Kommunikation. Stattdessen werden vorhandene Optokoppler der PWM-Controller zur asynchronen seriellen Datenübertragung genutzt. Mit anderen Worten benötigt die vorgeschlagene Ausgestaltung keine andere Hardware als ohnehin schon in vielen aus dem Stand der Technik bekannten Kreiselpumpen und Steuerungen vorhanden, betreibt diese bereits vorhandene Hardware, die Optokoppler, jedoch nicht mit PWM sondern verwendet diese zur asynchronen seriellen Datenübertragung. Der Begriff Bestandteil meint insbesondere integriert.

Die Aufgabe der Erfindung wird weiterhin gelöst durch eine Motorsteuerung einer Kreiselpumpe, eine räumlich von der Motorsteuerung abgesetzten Steuerung und eine Signalleitung, wobei
die Motorsteuerung oder die Steuerung ein Paar antiparallel geschalteter Optokoppler aufweist und das Paar antiparallel geschalteter Optokoppler mittels der Signalleitung mit der Steuerung oder der Motorsteuerung verbunden ist, und
die Motorsteuerung und die Steuerung jeweils zum bidirektionalen Kommunizieren über das Paar antiparallel geschalteter Optokoppler mittels asynchroner serieller Datenübertragung eingerichtet sind.

Gemäß einer bevorzugten Ausgestaltung erfolgt das bidirektionale Kommunizieren nach einem Modbus-Protokoll, insbesondere gemäß IEC 61158, bevorzugt nach CPF15.

Nach einer bevorzugten Weiterbildung weist die Signalleitung drei Leiter auf und ist einer der drei Leiter mit allen Optokopplern verbunden.

Gemäß einer weiteren bevorzugten Ausgestaltung sind die Motorsteuerung und die Steuerung wenigstens 1, 2 oder 5 m räumlich voneinander entfernt angeordnet.

Nach einer bevorzugten Weiterbildung weisen die Motorsteuerung und/oder die Steuerung einen Pulsweitenmodulation-Controller auf und ist das Paar antiparallel geschalteter Optokoppler Bestandteil des Pulsweitenmodulation-Controllers.

Gemäß einer weiteren bevorzugten Ausgestaltung weist die Anordnung die die Kreiselpumpe auf, wobei die Kreiselpumpe die Motorsteuerung umfasst.

Weitere Ausgestaltungen und Vorteile der Anordnung ergeben sich für den Fachmann aus dem zuvor beschriebenen Verfahren.

### Kurze Beschreibung der Zeichnungen

Nachfolgend wird die Erfindung unter Bezugnahme auf die anliegenden Zeichnungen anhand eines bevorzugten Ausführungsbeispiels näher erläutert.

In den Zeichnungen zeigen
- Fig. 1: eine schematische Ansicht einer Anordnung zum Ausführen eines vorgeschlagenen Verfahrens gemäß einem bevorzugten Ausführungsbeispiel der Erfindung, und
- Fig. 2: eine schematische Teilansicht der Anordnung der Fig. 1 gemäß dem bevorzugten Ausführungsbeispiel der Erfindung.

### Detaillierte Beschreibung des Ausführungsbeispiels

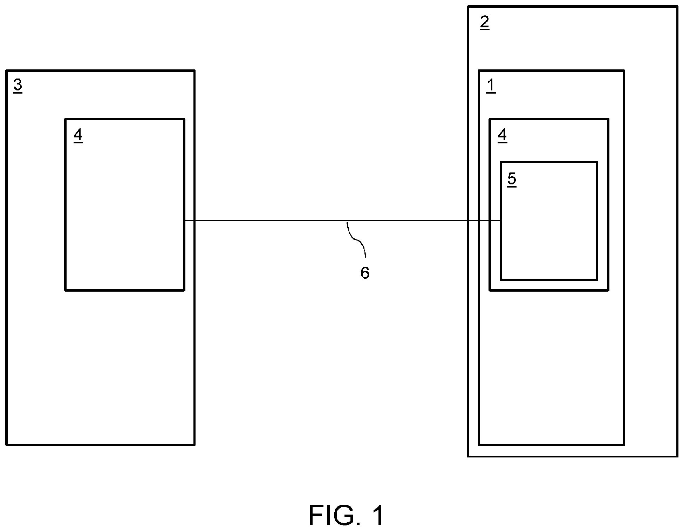

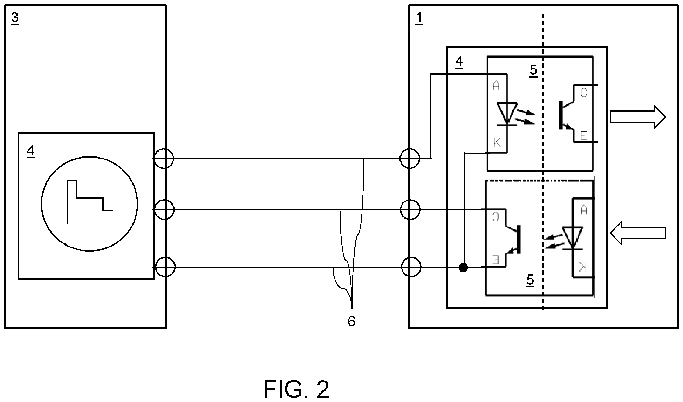

Fig. 1 zeigt eine schematische Ansicht einer Anordnung zum Ausführen eines vorgeschlagenen Verfahrens zum Kommunizieren zwischen einer Motorsteuerung 1 einer Kreiselpumpe 2 und einer räumlich von der Motorsteuerung 1 abgesetzten Steuerung 3 gemäß einem bevorzugten Ausführungsbeispiel der Erfindung, während Fig. 2 eine schematische Teilansicht der Anordnung der Fig. 1 gemäß dem bevorzugten Ausführungsbeispiel der Erfindung zeigt.

Die Kreiselpumpe 2 ist als aus dem Stand der Technik bekannte Kreiselpumpe zum Fördern eines Fluids ausgestaltet. Dazu weist die Kreiselpumpe 2 ein nicht gezeigtes Pumpengehäuse mit einem Einlass, einer in dem Pumpengehäuse angeordneten Welle, einem auf der Welle sitzenden Laufrad sowie einen die Welle antreibenden Antriebsmotor auf. Ferner weist die Kreiselpumpe 2 ein nicht gezeigtes Elektronikgehäuse auf, das an dem Pumpengehäuse angeordnet ist und die mikroprozessorbasierte Motorsteuerung 1 beherbergt. Wenn auch nur schematisch gezeigt, sind die Motorsteuerung 1 und die Steuerung 3 wenigstens 1, 2, 5, 10, 20, 50 oder 100 m räumlich voneinander entfernt angeordnet.

Die Motorsteuerung 1 und die Steuerung 3 weisen jeweils einen Pulsweitenmodulation, PWM-Controllers 4 auf, der eine elektronische Steuereinheit darstellt, die elektrische Signale durch Modulation einer Pulsbreite - also Ein- und Ausschaltzeiten innerhalb eines festen Zeitrahmens - erzeugt, um im Falle der Motorsteuerung 1 eine Leistung und Drehzahl des Antriebsmotors durch Anpassung eines Tastverhältnisses von Ausgangssignalen zu steuern. Bei der betrachteten Motorsteuerung 1 und der Steuerung 3 wird angenommen, dass der PWM-Controller 4 auch herkömmlich zur Kommunikation der Motorsteuerung 1 und Steuerung 3 untereinander mittels PWM-Signale dient, also bereits in der Motorsteuerung 1 und der Steuerung 3 vorhanden ist. Dazu weist wenigstens der PWM-Controller 4 der Motorsteuerung 1 ein Paar antiparallel geschalteter Optokoppler 5 auf. Die Motorsteuerung 1 und die Steuerung 3 sind über das Paar antiparallel geschalteter Optokoppler 5 mittels einer Signalleitung 6 miteinander verbunden. Mit anderen Worten verbindet die Signalleitung 6 die Steuerung 3 mit dem Paar antiparallel geschalteter Optokoppler 5.

Die Hardware des PWM-Controllers 4 besteht aus einem Mikrocontroller oder einem digitalen Signalprozessor, DSP, der Steueralgorithmen ausführt und PWM-Signale zum Ansteuern des Antriebsmotors generiert. Treiberstufen bringen die die vom Mikrocontroller erzeugten PWM-Signale auf eine für Leistungshalbleiter geeignete Spannung und Stromstärke. Diese Leistungshalbleiter, wie MOSFETs oder IGBTs, schalten dann die Spannung in kurzen Intervallen zum Antriebsmotor. Zusätzlich können analoge Schaltungskomponenten für Strom- und Spannungsmessung, Schutzfunktionen, beispielsweise Überstrom- oder Übertemperaturschutz, sowie Taktgeber zur präzisen Zeitsteuerung integriert sein. Zudem sind Kommunikationsschnittstellen zur herkömmlichen Kommunikation mittels PWM-Signale der Motorsteuerung 1 und Steuerung 3 untereinander vorgesehen.

Der PWM-Controller 4 der Motorsteuerung 1 beinhaltet das Paar antiparallel geschalteter Optokoppler 5, wie in Fig. 2 im Detail anhand der Motorsteuerung 1 visualisiert. Die Optokoppler 5, auch als Optoisolator bezeichnet, sind grundsätzlich elektronische Bauelemente, die zur galvanischen Trennung von zwei Stromkreisen verwendet werden, während gleichzeitig eine Signalübertragung zwischen ihnen über die Signalleitung 6 ermöglicht wird. Die Optokoppler 5 bestehen im Wesentlichen aus einer Leuchtdiode, LED, und einem lichtempfindlichen Halbleiterbauelement, wie einem Fototransistor, die sich innerhalb eines lichtdichten Gehäuses befinden.

Wenn ein elektrisches Signal an die LED angelegt wird, emittiert diese Licht, das den Fototransistor auf der Empfängerseite aktiviert und dort ein entsprechendes Ausgangssignal erzeugt. Da die Übertragung rein optisch erfolgt, bleiben Eingangsschaltung und Ausgangsschaltung elektrisch vollständig getrennt. In Fig. 2 dient der obere Optokoppler 5 der Motorsteuerung 1 zum Kommunizieren von Daten von der Steuerung 3 an die Motorsteuerung 1, während der untere Optokoppler 5 der Motorsteuerung 1 zum Kommunizieren von Daten von der Motorsteuerung 1 an die Steuerung 3 dient.

Gemäß der vorgeschlagenen Lösung erfolgt anstelle einer Kommunikation mittels PWM-Signale vorliegend das Kommunizieren bidirektional mittels asynchroner serieller Datenübertragung über das Paar antiparallel geschalteter Optokoppler 5. Verwendet wird dazu ein Modbus-Protokoll gemäß IEC 61158, bevorzugt nach CPF15, wodurch Daten in binärer Form übertragen werden. Daneben sind auch andere Kommunikationsprotokolle verwendbar.

Die Signalleitung besteht wie aus Fig. 3 zu erkennen aus drei Leitern, wobei einer der drei Leiter, der mit Erde bzw. Masse verbunden ist, mit allen Optokopplern verbunden ist. Der in der Fig. 2 oben gezeigte Leiter dient zum Kommunizieren von Daten von der Steuerung 3an die, während der mittlere Leiter zum Kommunizieren von Daten von der Motorsteuerung 1 an die Steuerung 3 dient.

Das beschriebene Ausführungsbeispiel ist lediglich ein Beispiel, das im Rahmen der Ansprüche auf vielfältige Weise modifiziert und/oder ergänzt werden kann. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

### Bezugszeichenliste

| | |
|---|---|
| Motorsteuerung | 1 |
| Kreiselpumpe | 2 |
| Steuerung | 3 |
| Pulsweitenmodulation, PWM-Controller | 4 |
| Optokoppler | 5 |
| Signalleitung | 6 |

## Patentansprüche

1. Verfahren zum Kommunizieren zwischen einer Motorsteuerung (1) einer Kreiselpumpe (2) und einer räumlich von der Motorsteuerung (1) abgesetzten Steuerung (3), wobei
die Motorsteuerung (1) oder die Steuerung (3) ein Paar antiparallel geschalteter Optokoppler (5) aufweist und das Paar antiparallel geschalteter Optokoppler (5) mittels einer Signalleitung (6) mit der Steuerung (3) oder der Motorsteuerung (1) verbunden ist, mit dem Schritt:
bidirektionales Kommunizieren zwischen der Motorsteuerung (1) und der Steuerung (3) über das Paar antiparallel geschalteter Optokoppler (5) mittels asynchroner serieller Datenübertragung.

2. Verfahren nach dem vorhergehenden Anspruch, wobei das bidirektionale Kommunizieren nach einem Modbus-Protokoll, insbesondere gemäß IEC 61158, bevorzugt nach CPF15, erfolgt.

3. Verfahren nach einem der vorhergehenden Ansprüche, wobei die Signalleitung (6) drei Leiter aufweist und einer der drei Leiter mit allen Optokopplern (5) verbunden ist.

4. Verfahren nach einem der vorhergehenden Ansprüche, wobei die Motorsteuerung (1) und die Steuerung (3) wenigstens 1, 2 oder 5 m räumlich voneinander entfernt angeordnet sind.

5. Verfahren nach einem der vorhergehenden Ansprüche, wobei das Paar antiparallel geschalteter Optokoppler (5) Bestandteil eines Pulsweitenmodulation-Controllers (4) ist.

6. Anordnung aufweisend eine Motorsteuerung (1) einer Kreiselpumpe (2), eine räumlich von der Motorsteuerung (1) abgesetzten Steuerung (3) und eine Signalleitung (6), wobei
die Motorsteuerung (1) oder die Steuerung (3) ein Paar antiparallel geschalteter Optokoppler (5) aufweist und das Paar antiparallel geschalteter Optokoppler (5) mittels der Signalleitung (6) mit der Steuerung (3) oder der Motorsteuerung (1) verbunden ist, und
die Motorsteuerung (1) und die Steuerung (3) jeweils zum bidirektionalen Kommunizieren über das Paar antiparallel geschalteter Optokoppler (5) mittels asynchroner serieller Datenübertragung eingerichtet sind.

7. Anordnung nach dem vorhergehenden Anspruch, wobei das bidirektionale Kommunizieren nach einem Modbus-Protokoll, insbesondere gemäß IEC 61158, bevorzugt nach CPF15, erfolgt.

8. Anordnung nach einem der beiden vorhergehenden Ansprüche, wobei die Signalleitung (6) drei Leiter aufweist und einer der drei Leiter mit allen Optokopplern (5) verbunden ist.

9. Anordnung nach einem der drei vorhergehenden Ansprüche, wobei die Motorsteuerung (1) und die Steuerung (3) wenigstens 1, 2 oder 5 m räumlich voneinander entfernt angeordnet sind.

10. Anordnung nach einem der vier vorhergehenden Ansprüche, wobei die Motorsteuerung (1) und/oder die Steuerung (3) einen Pulsweitenmodulation-Controller (4) aufweist und das Paar antiparallel geschalteter Optokoppler (5) Bestandteil des Pulsweitenmodulation-Controllers (4) ist.

11. Anordnung nach einem der fünf vorhergehenden Ansprüche, aufweisend die Kreiselpumpe (2), wobei die Kreiselpumpe (2) die Motorsteuerung (1) umfasst.
